# EUROPÄISCHE PATENTSCHRIFT

(11) **EP 1 800 511 B1**
(45) Veröffentlichungstag und Bekanntmachung des Hinweises auf die Patenterteilung: **08.06.2016**
(21) Anmeldenummer: 05787270.7
(22) Anmeldetag: 20.09.2005
(51) Int. Cl.: H04W 48/18

(54) **VERFAHREN ZUR AUSFÜHRUNG DURCH EIN MOBILTELEKOMMUNIKATIONSGERÄT MIT EINEM TEILNEHMERMODUL, MOBILTELEKOMMUNIKATIONSGERÄT, TEILNEHMERMODUL UND ENTSPRECHENDE VORRICHTUNG**
METHOD FOR IMPLEMENTATION BY A MOBILE TELECOMMUNICATION DEVICE HAVING A SUBSCRIBER MODULE, MOBILE TELECOMMUNICATION DEVICE, SUBSCRIBER MODULE AND CORRESPONDING APPARATUS
PROCEDE POUR LA MISE EN OEUVRE PAR UN DISPOSITIF DE TELECOMMUNICATION MOBILE EQUIPÉ D'UN MODULE D'ABONNÉ, DISPOSITF DE TELECOMMUNICATION MOBILE, MODULE D'ABONNÉ, ET APPAREIL CORRESPONDANT

(30) Priorität: 23.09.2004 DE 102004046136
(43) Veröffentlichungstag der Anmeldung: 27.06.2007
(73) Patentinhaber: Giesecke & Devrient GmbH, 81677 München (DE)
(72) Erfinder: SCHÖNBERNER, Rainer, 85604 Zorneding (DE)
(86) Internationale Anmeldenummer: PCT/EP2005/010140
(87) Internationale Veröffentlichungsnummer: WO 2006/032460

(56) Entgegenhaltungen:
- EP-A- 0 980 190
- WO-A-01/58190
- WO-A-02/076131
- DE-A1- 19 948 950
- GB-A- 2 292 047

## Beschreibung

Die Erfindung betrifft allgemein das Gebiet der Telekommunikation und spezieller das Gebiet der mobilen Telekommunikation über unterschiedliche Netzzugänge zu Telekommunikationsnetzen.

Die Nutzung mobiler Telekommunikationssysteme hat seit ungefähr einem Jahrzehnt sprunghaft zugenommen. Die bestehenden Netze werden immer weiter ausgebaut, und neue Netzzugangstechnologien werden entwickelt und setzen sich zunehmend am Markt durch. Die bisherigen Mobilfunktechnologien zweiter Generation (z.B. GSM, CDMA, ...) sind bereits durch Technologien einer Zwischengeneration - der sogenannten "2,5-ten Generation" (z.B. GPRS, ...) - ergänzt worden. Gegenwärtig wird die Infrastruktur für Mobilfunktechnologien der dritten Generation (z.B. UMTS, ...) geschaffen. Hinzu kommen lokale Netzzugangstechnologien wie z.B. WLAN, die zunehmend nicht nur für die reine Datenübertragung, sondern für alle Arten der Telekommunikation - z.B. über das *Voice-over-IP*-(VoIP)-Protokoll - genutzt werden.

Diese Entwicklung führt in zunehmendem Maße dazu, daß zu einem gegebenen Zeitpunkt und an einem gegebenen Ort mehrere Netzzugänge, die unterschiedliche Technologien und unterschiedliche Protokolle aufweisen, für einen Telekommunikationsvorgang zur Verfügung stehen. Es besteht ein Bedürfnis, diese Netzzugänge auf eine für den Benutzer möglichst bequeme, kostengünstige und/ oder flexible Weise zu nutzen.

GB 2 292 047 A offenbart ein Mobiltelekommunikationsgerät, das in mehreren Kommunikationsnetzen zu arbeiten vermag und mehrere netzspezifische Softwarevarianten aufweist. Ein Identifikationsmodul gibt an, in welchem Netz das Mobiltelekommunikationsgerät arbeiten soll und welche Softwarevariante es verwenden soll.

WO 01/58190 A1 offenbart ein Mobiltelekommunikationsgerät, das unterschiedliche Netzzugänge, z.B. GSM-, GPRS-, UMTS- und WLAN-Zugänge, zu nutzen vermag. Eine USIM-Karte (USIM = *Universal Subscriber Identity Module* = universelles Teilnehmeridentitätsmodul) enthält eine Liste mit Prioritäten von zu verwendenden Netzzugängen. Das Mobiltelekommunikationsgerät wählt für einen Telekommunikationsvorgang denjenigen verfügbaren Netzzugang aus, der gemäß der Prioritätenliste die höchste Priorität aufweist.

WO 2004/039117 A1 offenbart ein Mobiltelekommunikationsgerät, das dazu eingerichtet ist, mit Funknetzen der zweiten und dritten Generation sowie mit lokalen Funknetzen zu kommunizieren.

DE 199 48 950 A1 zeigt ein Mobilfunkendgerät, das einen *Least Cost Router* verwendet, um den kostengünstigsten von mehreren Dienstanbietern auszuwählen. Hierzu sind in einer SIM-Karte (SIM = *Subscriber Identity Module =* Teilnehmeridentitätsmodul) Netzvorwahlen mehrerer Dienstanbieter und Tarifdaten gespeichert.

Die Erfindung hat die Aufgabe, eine Technik zur komfortablen und flexiblen Nutzung von Netzzugängen bereitzustellen. In bevorzugten Ausgestaltungen soll die Erfindung möglichst unabhängig von der verwendeten Telekommunikationshardware einsetzbar sein.

Erfindungsgemäß wird diese Aufgabe ganz oder zum Teil gelöst durch ein Verfahren mit den Merkmalen des Anspruchs 1, ein Mobiltelekommunikationsgerät gemäß Anspruch 18 und ein Teilnehmermodul gemäß Anspruch 19. Die abhängigen Ansprüche betreffen bevorzugte Ausgestaltungen der Erfindung.

Die Erfindung geht von der Grundidee aus, durch ein in dem Speicher des Teilnehmermoduls enthaltenes und von dem Prozessor des Teilnehmermoduls ausgeführtes Programm Daten zu ermitteln und auszuwerten, die zumindest die Verfügbarkeit der Netzzugänge betreffen. Dadurch ergeben sich eine hohe Flexibilität und vielfache Einsatzmöglichkeiten, weil ein erfindungsgemäßes Teilnehmermodul mit einer Vielzahl kompatibler Mobiltelekommunikationsgeräte zusammenzuarbeiten vermag. Wenn bei einem Wechsel des Mobiltelekommunikationsgeräts das Teilnehmermodul übernommen wird, steht dem Benutzer die erfindungsgemäße Funktionalität sogleich wieder zur Verfügung, ohne daß eine irgendwie geartete Konfigurierung erforderlich wäre.

Erfindungsgemäß ist das Mobiltelekommunikationsgerät zur Nutzung mindestens zweier Netzzugänge, die unterschiedliche Technologien und unterschiedliche Protokolle aufweisen, eingerichtet. In diesem Zusammenhang ist unter einer "Technologie" die physische Ausgestaltung der Datenübertragung und unter einem "Protokoll" deren logische Ausgestaltung zu verstehen.

In bevorzugten Ausgestaltungen führt das auf dem Teilnehmermodul ablaufende Programm eine Bewertung der verfügbaren Netzzugänge und/ oder der über diese Netzzugänge zugänglichen Kommunikationsdienste aus. Durch eine solche Bewertung läßt sich beispielsweise die Funktion eines *Least Cost Router* implementieren. Neben oder statt der anfallenden Kosten können auch andere Bewertungskriterien herangezogen werden, z.B. die Qualität und/ oder Leistungsfähigkeit und/ oder augenblickliche Auslastung der zur Verfügung stehenden Netzzugänge und/ oder der über diese Netzzugänge zugänglichen Kommunikationsdienste.

Vorzugsweise sind die zur Bewertung erforderlichen Daten - z.B. die Tarifdaten der einzelnen Dienstanbieter oder die Gewichtung, mit der die einzelnen Bewertungskriterien herangezogen werden sollen - in mindestens einer Datentabelle abgelegt. Die Datentabelle befindet sich vorzugsweise im Teilnehmermodul. In bevorzugten Ausgestaltungen wird die Datentabelle regelmäßig oder auf Anforderung des Benutzers aktualisiert. Hierzu kann auf an sich bekannte Weise auf eine externe - gegebenenfalls kostenpflichtige - Datenquelle zugegriffen werden.

Das Mobiltelekommunikationsgerät ist erfindungsgemäß zur Nutzung mindestens zweier Netzzugangstechnologien ausgestaltet. Die Netzzugänge können Mobilfunk-Netzzugänge und/ oder lokale Netzzugänge sein, wie sie bereits eingangs beispielhaft erwähnt wurden. In an sich bekannter Weise ist über jeden Netzzugang mindestens ein Telekommunikationsnetz erreichbar.

Die Erfindung kann im Zusammenhang mit der Wahl eines zu verwendenden Netzzugangs für einen neuen Telekommunikationsvorgang oder im Zusammenhang mit einem Zugangswechsel für einen bereits laufenden Telekommunikationsvorgang eingesetzt werden. In beiden Fällen kann die Auswahl des zu verwendenden Netzzugangs automatisch oder in Reaktion auf eine Benutzereingabe erfolgen.

Die Erfindung ist besonders universell einsetzbar, wenn das in dem Teilnehmermodul ablaufende Programm über eine als offizielle Norm oder als De-facto-Standard standardisierte Softwareschnittstelle mit dem Mobiltelekommunikationsgerät kommuniziert. Eine solche an sich bekannte Softwareschnittstelle sind z.B. der *SIM Application Toolkit* (SAT) und der *USIM Application Toolkit* (USAT) gemäß den ETSI-Normen GSM 11.14 beziehungsweise 3GPP 31.111. Das Teilnehmermodul ist vorzugsweise ein SIM oder USIM, wie es an sich bekannt ist und eingangs bereits erwähnt wurde.

Das erfindungsgemäße Mobiltelekommunikationsgerät sowie das erfindungsgemäße Teilnehmermodul sind vorzugsweise mit Merkmalen weitergebildet, die den oben beschriebenen und/ oder den in den abhängigen Verfahrensansprüchen genannten Merkmalen entsprechen.

Weitere Merkmale, Vorteile und Aufgaben der Erfindung gehen aus der folgenden genauen Beschreibung von Ausführungsbeispielen der Erfindung hervor. In den schematischen Zeichnungen zeigen:
Fig.1 eine schematische Darstellung der Netzzugangsmöglichkeiten eines erfindungsgemäßen Mobiltelekommunikationsgeräts mit einem Teilnehmermodul, und
Fig. 2 ein beispielhaftes Ablaufdiagramm der Datenübertragung zwischen dem Mobiltelekommunikationsgerät und dem Teilnehmermodul in einem Ausführungsbeispiel der Erfindung.

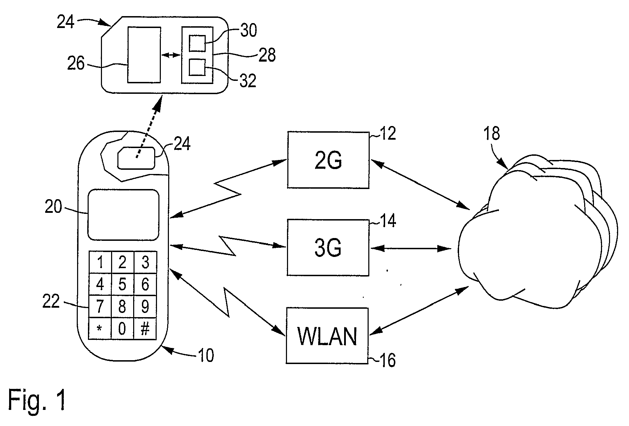

Bei dem in Fig.1 gezeigten Mobiltelekommunikationsgerät 10 handelt es sich um ein an sich bekanntes Gerät, das dazu eingerichtet ist, eine Mehrzahl von Netzzugängen für Kommunikationsfunktionen zu benutzen. In Fig.1 sind hier beispielhaft ein Mobilfunk-Netzzugang zweiter Generation 12 (z.B. GSM, CDMA, ...), ein Mobilfunk-Netzzugang dritter Generation 14 (z.B. UMTS, ...) und ein lokaler Netzzugang 16 gezeigt. Der lokale Netzzugang 16 kann beispielsweise ein WLAN-*Hotspot* gemäß Norm 802.11 oder ein *Bluetooth*-Zugang sein.

Über die Netzzugänge 12,14,16 vermag das Mobiltelekommunikationsgerät 10 auf diverse Telekommunikationsdienste mehrerer Telekommunikationsnetze 18 zuzugreifen. Die Telekommunikationsnetze 18 sind an sich bekannt; sie umfassen das allgemeine Telefonnetz PSTN (*Public Switched Telephone Network),* Netze einzelner Mobilfunkanbieter, das Internet und so weiter. Die Telekommunikationsnetze 18 sind über geeignete Vermittlungsstellen untereinander verbunden. Je nach der verwendeten Technologie können der Netzzugang und das zugehörige Telekommunikationsnetz weitgehend ineinander integriert oder weitgehend unabhängig voneinander sein. Der erstgenannte Fall ist z.B. bei GSM gegeben, während der zweitgenannte Fall z.B. bei einem WLAN-Netzzugang mit Sprachübertragung im Internet durch das *Voice-over-IP*-(VoIP)-Protokoll gegeben ist.

Das Mobiltelekommunikationsgerät 10 weist eine Anzeige 20 und eine Tastatur 22 auf. In Fig.1 nicht gezeigt sind die an sich bekannten internen Komponenten des Mobiltelekommunikationsgeräts 10, z.B. ein Hoch- und ein Niederfrequenzteil, ein digitaler Signalprozessor (DSP), ein Steuerprozessor, der ein Betriebssystem und eine Vielzahl von Steuerprogrammen ausführt, und so weiter.

Ein Teilnehmermodul 24 ist in das Mobiltelekommunikationsgerät 10 eingesteckt. Das Teilnehmermodul 24 ist auf an sich bekannte Weise als SIM oder USIM ausgestaltet und weist einen Halbleiterchip mit einem Prozessor 26 und einem Speicher 28 auf. Der Speicher 28 enthält Bereiche, die in unterschiedlichen Technologien ausgestaltet sind, z.B. einen als ROM ausgestalteten Programmspeicher, einen als EEPROM ausgestalteten nichtflüchtigen Speicher und einen als RAM ausgestalteten Arbeitsspeicher.

Der Speicher 28 enthält in an sich bekannter Weise ein Betriebssystem (nicht gezeigt) für das Teilnehmermodul 24 und eine Mehrzahl von Softwareroutinen (nicht gezeigt), die die für ein SIM oder USIM üblichen Funktionen implementieren. Im Zusammenhang mit der vorliegenden Erfindung enthält der Speicher 28 ferner ein Programm 30 zur Ausführung durch den Prozessor 26 und eine Datentabelle 32.

Das Programm 30 steuert den im folgenden noch genauer beschriebenen Ablauf, durch den die Funktion eines *Best Bearer Router* durch das Teilnehmermodul 24 implementiert wird. Hierbei kommunizieren das Mobiltelekommunikationsgerät 10 und das Teilnehmermodul 24 über Befehle und Antworten gemäß den oben bereits erwähnten SAT- beziehungsweise USAT-Spezifikationen.

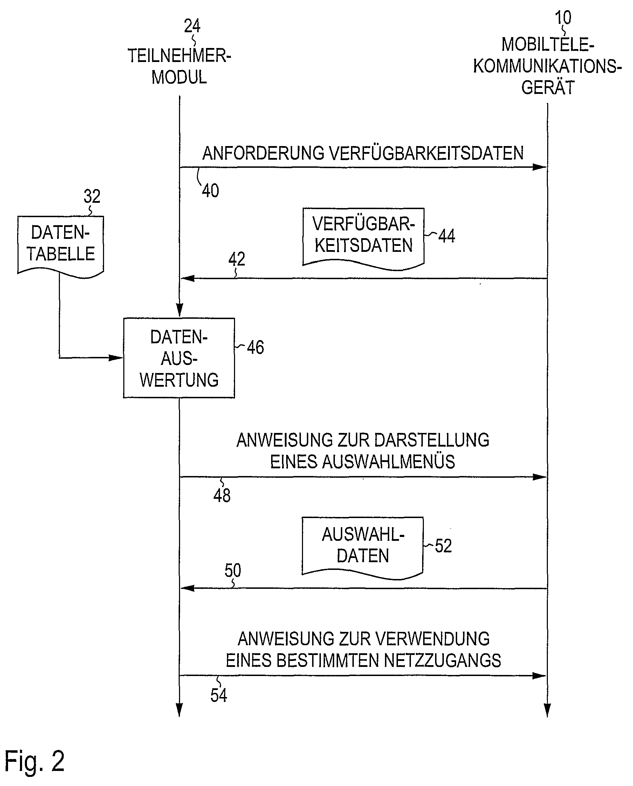

Fig. 2 zeigt ein Ausführungsbeispiel für die erfindungsgemäße Kommunikation zwischen dem Teilnehmermodul 24 und dem Mobiltelekommunikationsgerät 10 einschließlich der damit zusammenhängenden Datenverarbeitung. Der in Fig. 2 dargestellte Vorgang kann periodisch ausgeführt werden oder vom Benutzer manuell angestoßen werden oder automatisch ausgeführt werden, sobald ein vorbestimmtes Kriterium erfüllt ist. Dieses Kriterium kann z.B. sein, daß das Mobiltelekommunikationsgerät 10 den gegenwärtigen Netzeinzugsbereich verläßt.

Der Verfahrensablauf gemäß Fig. 2 beginnt in Schritt 40 damit, daß das Teilnehmermodul 24 einen SAT- oder USAT-Befehl zur Anforderung von Verfügbarkeitsdaten an das Mobiltelekommunikationsgerät 10 sendet. Das Mobiltelekommunikationsgerät 10 verarbeitet diesen Befehl und gibt in Schritt 42 die ermittelten Verfügbarkeitsdaten 44 an das Teilnehmermodul 24 aus. Die Darstellung in Fig. 2 ist lediglich schematisch zu verstehen. In einer tatsächlichen Implementierung können z.B. die Schritte 40 und 42 als Folge von Teilschritten ausgeführt werden, in denen jeweils Daten zur Verfügbarkeit je eines Netzzugangs 12,14,16 angefordert und übermittelt werden.

Der Prozessor 26 des Teilnehmermoduls 24 verarbeitet die erhaltenen Verfügbarkeitsdaten 44 in Schritt 46. Hierbei wird auch der Inhalt der Datentabelle 32 herangezogen, um aus den verfügbaren Netzzugängen und/ oder den über diese Netzzugänge zugänglichen Telekommunikationsdiensten die für den Benutzer günstigsten auszuwählen. Bei der Auswahl ist insbesondere der in der Datentabelle 32 angegebene Preis für den gewünschten Telekommunikationsvorgang entscheidend. Ferner können, je nach den Präferenzen des Benutzers, die Qualität und/ oder Leistungsfähigkeit und/ oder Auslastung der einzelnen Netzzugänge 12,14,16 oder Netze 18 sowie andere Kriterien herangezogen werden. Diese Benutzerpräferenzen - insbesondere die Auswahl und Gewichtung der heranzuziehenden Kriterien - sind ebenfalls in der Datentabelle 32 gespeichert.

Die in der Datentabelle 32 gespeicherten Benutzerpräferenzen sind in dem hier beschriebenen Ausführungsbeispiel vom Benutzer über eine vom Mobiltelekommunikationsgerät 10 bereitgestellte Benutzerschnittstelle definiert worden. Die Tarifdaten werden dagegen von einer externen Datenquelle geladen und aktualisiert. Die Aktualisierung der Tarifdaten kann in regelmäßigen Abständen erfolgen oder vom Benutzer oder von der externen Datenquelle angestoßen werden. Die externe Datenquelle kann z.B. von einem Datenanbieter als kostenpflichtige Dienstleistung bereitgestellt werden. Alternativ oder zusätzlich können einzelne Netzbetreiber geeignet formatierte Tarifdaten zu den von ihnen angebotenen Telekommunikationsdiensten anbieten. Für größere Benutzergruppen - z.B. Mitarbeiter von Firmen - kann es auch vorteilhaft sein, Tarifdaten zu erstellen, die speziell auf die Bedürfnisse der jeweiligen Benutzergruppe ausgerichtet sind.

Als Ergebnis des Auswertungsschritts 46 bestimmt das Teilnehmermodul 24 z.B. eine Rangfolge der für den Teilnehmer günstigsten Netzzugänge. Es versteht sich, daß hierbei auch eine Unterscheidung hinsichtlich mehrerer Anbieter, die über ein und denselben Netzzugang erreichbar sind, getroffen werden kann. Diese Liste der verfügbaren Optionen wird in Schritt 48 an das Mobiltelekommunikationsgerät 10 übertragen und dort auf der Anzeige 12 angezeigt. Der Benutzer entscheidet sich durch eine entsprechende Auswahl auf der Tastatur 14 für eine dieser Optionen. In Schritt 50 werden Daten 52, die diese Auswahl angeben, an das Teilnehmermodul 24 übertragen.

Das Teilnehmermodul 24 weist daraufhin das Mobiltelekommunikationsgerät 10 in Schritt 54 an, den ausgewählten Netzzugang - und gegebenenfalls einen ebenfalls ausgewählten Anbieter - zu verwenden. Diese Anweisung in Schritt 54 kann einen bereits laufenden oder einem neu aufzubauenden Telekommunikationsvorgang betreffen.

Es versteht sich, daß statt einer mehrere Optionen umfassenden Auswahlliste in Schritt 48 auch vorgesehen sein kann, lediglich Informationen über einen einzigen - nämlich den günstigsten - Netzzugang und Anbieter an das Mobiltelekommunikationsgerät 10 zur Darstellung auf der Anzeige 20 zu übertragen. Der Benutzer braucht dann lediglich die vorgeschlagene Auswahl durch einen Tastendruck zu bestätigen.

In weiteren Ausführungsalternativen wird auf die Benutzerinteraktion in den Schritten 48 und 50 des in Fig. 2 gezeigten Verfahrens verzichtet. Hier wird im Bewertungsschritt 46 eine automatische Auswahl getroffen, die dem in der Datentabelle 32 enthaltenen Benutzerprofil möglichst weitgehend entspricht. Das Teilnehmermodul 24 weist dann das Mobiltelekommunikationsgerät 10 ohne Benutzerinteraktion an, den automatisch ausgewählten Netzzugang - und gegebenenfalls einen automatisch ausgewählten Dienstanbieter oder sonstige Dienstoptionen - zu verwenden.

Insgesamt ermöglicht das Programm 30 damit die Auswahl eines für den Benutzer optimalen Netzzugangs und auch die Übergabe von einem Netzzugang (z.B. dem Mobilfunk-Netzzugang 14) zu einem anderen Netzzugang (z.B. dem lokalen Netzzugang 16). Hierbei kann das Programm 30 für eine wesentliche Kosteneinsparung sorgen, indem beispielsweise ein Auslandsgespräch über *Voice over IP* (VoIP) geführt wird und ferner der jeweils günstigste Dienstanbieter gewählt wird. Diese Vorteile werden durch die erfindungsgemäße Lösung flexibel und benutzerbezogen sowie weitgehend unabhängig von dem verwendeten Mobiltelekommunikationsgerät 10 erreicht.

## Patentansprüche

1. Verfahren zur Ausführung durch ein Mobiltelekommunikationsgerät (10) mit einem Teilnehmermodul (24), wobei das Teilnehmermodul (24) einen Prozessor (26) und mindestens einen Speicher (28) aufweist, und wobei das Mobiltelekommunikationsgerät (10) zur Nutzung mindestes zweier Netzzugänge (12, 14,16), die unterschiedliche Technologien und unterschiedliche Protokolle aufweisen, eingerichtet ist, wobei ein in dem Speicher (28) des Teilnehmermoduls (24) enthaltenes und von dem Prozessor (26) des Teilnehmermoduls (24) ausgeführtes Programm (30) Daten (44) ermittelt und auswertet, die zumindest die Verfügbarkeit der Netzzugänge (12,14,16) für einen Telekommunikationsvorgang betreffen, wobei der Telekommunikationsvorgang eine aufzubauende Sprach- oder Datenübertragung ist, und wobei der für diesen Telekommunikationsvorgang zu verwendende Netzzugang (12, 14,16) unter Steuerung des Programms (30) bestimmt wird.

2. Verfahren nach Anspruch 1, **dadurch gekennzeichnet, daß** die Auswertung der Daten (44) eine Bewertung der verfügbaren Netzzugänge (12,14,16) und/oder der über diese Netzzugänge (12,14,16) zugänglichen Telekommunikationsdienste nach mindestens einem vorbestimmten Kriterium umfaßt.

3. Verfahren nach Anspruch 2, **dadurch gekennzeichnet, daß** das mindestens eine vorbestimmte Kriterium die Kosten für den Telekommunikationsvorgang und/oder die Qualität und/oder die Leistungsfähigkeit und/ oder die Auslastung des Netzzugangs (12,14,16) sind/ist.

4. Verfahren nach Anspruch 2 oder Anspruch 3, **dadurch gekennzeichnet, daß** die Bewertung der verfügbaren Netzzugänge (12, 14,16) und/ oder der über diese Netzzugänge (12,14,16) zugänglichen Telekommunikationsdienste nach den Kosten für den Telekommunikationsvorgang und nach mindestens einem weiteren Kriterium erfolgt.

5. Verfahren nach Anspruch 4, **dadurch gekennzeichnet, daß** das mindestens eine weitere Kriterium die Qualität und/ oder die Leistungsfähigkeit und/ oder die Auslastung des Netzzugangs (12,14,16) sind/ ist.

6. Verfahren nach einem der Ansprüche 2 bis 5, **dadurch gekennzeichnet, daß** die Bewertung der verfügbaren Netzzugänge (12, 14,16) und/ oder der über diese Netzzugänge (12,14,16) zugänglichen Telekommunikationsdienste in Abhängigkeit von Benutzerpräferenzen erfolgt, die eine Auswahl und Gewichtung der heranzuziehenden Kriterien beinhalten.

7. Verfahren nach einem der Ansprüche 1 bis 6, **dadurch gekennzeichnet, daß** die Bewertung anhand mindestens einer in dem Teilnehmermodul (24) gespeicherten Datentabelle (32) durchgeführt wird.

8. Verfahren nach einem der Ansprüche 1 bis 7, **dadurch gekennzeichnet, daß** die Netzzugänge (12,14,16) zumindest einen Mobilfunk-Netzzugang (12,14) und zumindest einen lokalen Netzzugang (16) umfassen.

9. Verfahren nach einem der Ansprüche 1 bis 8, **dadurch gekennzeichnet, daß** die Netzzugänge (12,14,16) zumindest zwei der folgenden Mobilfunk-Netzzugänge (12,14) umfassen: einen Mobilfunk-Netzzugang (12) der zweiten Generation, einen Mobilfunk-Netzzugang einer Zwischengeneration, und einen Mobilfunk-Netzzugang (14) der dritten Generation.

10. Verfahren nach Anspruch 1, **dadurch gekennzeichnet, daß** unter Steuerung des Programms (30) zumindest einer der verfügbaren Netzzugänge (12,14,16) auf einer Anzeige (20) des Mobiltelekommunikationsgeräts (10) angezeigt wird, und daß der zu verwendende Netzzugang (12, 14, 16) ansprechend auf eine Benutzereingabe bestimmt wird.

11. Verfahren nach Anspruch 1, **dadurch gekennzeichnet, daß** der zu verwendende Netzzugang (12,14,16) durch das Programm (30) automatisch bestimmt wird.

12. Verfahren nach einem der Ansprüche 1 bis 11, **dadurch gekennzeichnet, daß** das Programm (30) über eine standardisierte Softwareschnittstelle mit dem Mobiltelekommunikationsgerät (10) kommuniziert.

13. Verfahren nach Anspruch 12, **dadurch gekennzeichnet, daß** die Softwareschnittstelle ein SAT, SIM Application Toolkit, oder ein USAT, USIM Application Toolkit, ist.

14. Verfahren nach einem der Ansprüche 1 bis 13, **dadurch gekennzeichnet, daß** das Teilnehmermodul (24) ein SIM, Subscriber Identity Module, oder ein USIM, Universal Subscriber Identity Module, ist.

15. Verfahren nach einem der Ansprüche 1 bis 14, **dadurch gekennzeichnet, daß** die Daten (44), die zumindest die Verfügbarkeit der Netzzugänge (12,14,16) betreffen, von dem Mobiltelekommunikationsgerät (10) an das Teilnehmermodul (24) übermittelt werden.

16. Mobiltelekommunikationsgerät (10) mit einem Teilnehmermodul (24), wobei das Teilnehmermodul (24) einen Prozessor (26) und mindestens einen Speicher (28) aufweist, und wobei das Mobiltelekommunikationsgerät (10) zur Nutzung mindestens zweier Netzzugänge (12,14,16), die unterschiedliche Technologien und unterschiedliche Protokolle aufweisen, eingerichtet ist, wobei der Speicher (28) des Teilnehmermoduls (24) ein Programm (30) enthält, das dazu eingerichtet ist, von dem Prozessor (26) des Teilnehmermoduls (24) ausgeführt zu werden und Daten (44) zu ermitteln und auszuwerten, die zumindest die Verfügbarkeit der Netzzugänge (12,14,16) für einen Telekommunikationsvorgang betreffen, wobei der Telekommunikationsvorgang eine aufzubauende Sprach- oder Datenübertragung ist, und wobei der für diesen Telekommunikationsvorgang zu verwendende Netzzugang (12,14,16) unter Steuerung des Programms (30) bestimmt wird.

17. Teilnehmermodul (24), das einen Prozessor (26) und mindestens einen Speicher (28) aufweist und das zur Kommunikation mit einem Mobiltelekommunikationsgerät (10) eingerichtet ist, wobei das Mobiltelekommunikationsgerät (10) zur Nutzung mindestens zweier Netzzugänge (12,14,16), die unterschiedliche Technologien und unterschiedliche Protokolle aufweisen, eingerichtet ist, wobei der Speicher (28) des Teilnehmermoduls (24) ein Programm (30) enthält, das dazu eingerichtet ist, von dem Prozessor (26) des Teilnehmermoduls (24) ausgeführt zu werden und Daten (44) von dem Mobiltelekommunikationsgerät (10) zu ermitteln und auszuwerten, die zumindest die Verfügbarkeit der Netzzugänge (12,14,16) für einen Telekommunikationsvorgang betreffen, wobei der Telekommunikationsvorgang eine aufzubauende Sprach- oder Datenübertragung ist, und wobei der für diesen Telekommunikationsvorgang zu verwendende Netzzugang (12, 14,16) unter Steuerung des Programms (30) bestimmt wird.

18. Vorrichtung nach Anspruch 16 oder Anspruch 17, **dadurch gekennzeichnet, daß** die Vorrichtung dazu eingerichtet ist, ein Verfahren nach einem der Ansprüche 1 bis 15 auszuführen.

## Claims

1. A method for execution by a mobile telecommunication device (10) with a subscriber module (24), wherein the subscriber module (24) has a processor (26) and at least one memory (28), and wherein the mobile telecommunication device (10) is adapted to use at least two network accesses (12, 14, 16) having different technologies and different protocols, wherein a program (30) contained in the memory (28) of the subscriber module (24) and executed by the processor (26) of the subscriber module (24) ascertains and evaluates data (44) concerning at least the availability of the network accesses (12, 14, 16) for a telecommunication process, wherein the telecommunication process is a voice or data transmission to be set up, and wherein the network access (12, 14, 16) to be used for said telecommunication process is determined under the control of the program (30).

2. The method according to claim **1, characterized in that** the evaluation of the data (44) includes an assessment of the available network accesses (12, 14, 16) and/or of the telecommunication services accessible via said network accesses (12, 14, 16) on the basis of at least one predetermined criterion.

3. The method according to claim 2, **characterized in that** the at least one predetermined criterion is/ are the costs of the telecommunication process and/or the quality and/or the performance and/or the utilization of the network access (12, 14, 16).

4. The method according to claim 2 or claim 3, **characterized in that** the assessment of the available network accesses (12, 14, 16) and/or of the telecommunication services accessible via said network accesses (12, 14, 16) is effected on the basis of the costs of the telecommunication process and on the basis of at least one further criterion.

5. The method according to claim 4, **characterized in that** the at least one further criterion is the quality and/or the performance and/or the utilization of the network access (12, 14, 16).

6. The method according to any of the claims 2 to 5, **characterized in that** the assessment of the available network accesses (12, 14, 16) and/or of the telecommunication services accessible via said network accesses (12, 14, 16) is effected in dependence on user preferences involving a selection and weighting of the criteria to be considered.

7. The method according to any of the claims 1 to 6, **characterized in that** the assessment is carried out by means of at least one data table (32) stored in the subscriber module (24).

8. The method according to any of the claims 1 to 7, **characterized in that** the network accesses (12, 14, 16) include at least one mobile communication network access (12, 14) and at least one local network access (16).

9. The method according to any of the claims 1 to 8, **characterized in that** the network accesses (12, 14, 16) include at least two of the following mobile communication network accesses (12, 14): one mobile communication network access (12) of the second generation, one mobile communication network access of an intermediate generation, and one mobile communication network access (14) of the third generation.

10. The method according to claim 1, **characterized in that,** under the control of the program (30), at least one of the available network accesses (12, 14, 16) is displayed on a display (20) of the mobile telecommunication device (10), and that the network access (12, 14, 16) to be used is determined in response to a user input.

11. The method according to claim 1, **characterized in that** the network access (12, 14, 16) to be used is automatically determined by the program (30).

12. The method according to any of the claims 1 to 11, **characterized in that** the program (30) communicates with the mobile telecommunication device (10) via a standardized software interface.

13. The method according to claim 12, **characterized in that** the software interface is a SAT, SIM application toolkit or a USAT, USIM application toolkit.

14. The method according to any of the claims 1 to 13, **characterized in that** the subscriber module (24) is a SIM, subscriber identity module or a USIM, universal subscriber identity module.

15. The method according to any of the claims 1 to 14, **characterized in that** the data (44) concerning at least the availability of the network accesses (12, 14, 16) are transmitted by the mobile telecommunication device (10) to the subscriber module (24).

16. A mobile telecommunication device (10) with a subscriber module (24), wherein the subscriber module (24) has a processor (26) and at least one memory (28), and wherein the mobile telecommunication device (10) is adapted to use at least two network accesses (12, 14, 16) having different technologies and different protocols, wherein the memory (28) of the subscriber module (24) contains a program (30) which is adapted to be executed by the processor (26) of the subscriber module (24) and to ascertain and evaluate data (44) concerning at least the availability of the network accesses (12, 14, 16) for a telecommunication process, wherein the telecommunication process is a voice or data transmission to be set up, and wherein the network access (12, 14, 16) to be used for said telecommunication process is determined under the control of the program (30).

17. A subscriber module (24) having a processor (26) and at least one memory (28) and being adapted to communicate with a mobile telecommunication device (10), wherein the mobile telecommunication device (10) is adapted to use at least two network accesses (12, 14, 16) having different technologies and different protocols, wherein the memory (28) of the subscriber module (24) contains a program (30) which is adapted to be executed by the processor (26) of the subscriber module (24) and to ascertain and evaluate data (44) from the mobile telecommunication device (10) concerning at least the availability of the network accesses (12, 14, 16) for a telecommunication process, wherein the telecommunication process is a voice or data transmission to be set up, and wherein the network access (12, 14, 16) to be used for said telecommunication process is determined under the control of the program (30).

18. The apparatus according to claim 16 or claim 17, **characterized in that** the apparatus is adapted to execute a method according to any of the claims 1 to 15.

## Revendications

1. Procédé destiné à être exécuté par un appareil de télécommunication mobile (10) doté d'un module d'abonné (24), le module d'abonné (24) comportant un processeur (26) et au moins une mémoire (28), et l'appareil de télécommunication mobile (10) étant configuré pour l'utilisation d'au moins deux accès à des réseaux (12, 14, 16) qui présentent différentes technologies et différents protocoles, un programme (30) contenu dans la mémoire (28) du module d'abonné (24) et exécuté par le processeur (26) du module d'abonné (24) repérant et évaluant des données (44) qui concernent au moins la disponibilité des accès à des réseaux (12, 14, 16) pour un processus de télécommunication, le processus de télécommunication étant une transmission vocale ou de données à établir, et l'accès à des réseaux (12, 14, 16) à utiliser pour ce processus de télécommunication étant déterminé sous la commande du programme (30).

2. Procédé selon la revendication 1, **caractérisé en ce que** l'évaluation des données (44) comprend une estimation des accès à des réseaux (12, 14, 16) disponibles et/ou des services de télécommunication accessibles par ces accès à des réseaux (12, 14, 16), suivant au moins un critère prédéterminé.

3. Procédé selon la revendication 2, **caractérisé en ce que** le au moins un critère prédéterminé est/sont les coûts pour le processus de télécommunication et/ou la qualité et/ou l'efficience et/ou le niveau de sollicitation de l'accès à des réseaux (12, 14, 16).

4. Procédé selon la revendication 2 ou la revendication 3, **caractérisé en ce que** l'estimation des accès à des réseaux (12, 14, 16) disponibles et/ou des services de télécommunication accessibles par ces accès à des réseaux (12, 14, 16) a lieu suivant les coûts pour le processus de télécommunication et suivant au moins un critère supplémentaire.

5. Procédé selon la revendication 4, **caractérisé en ce que** le au moins un critère supplémentaire est/sont la qualité et/ou l'efficience et/ou le niveau de sollicitation de l'accès à des réseaux (12, 14, 16).

6. Procédé selon une des revendications de 2 à 5, **caractérisé en ce que** l'estimation des accès à des réseaux (12, 14, 16) disponibles et/ou des services de télécommunication accessibles par ces accès à des réseaux (12, 14, 16) a lieu en fonction de préférences de l'utilisateur qui comportent une sélection et une pondération des critères à utiliser.

7. Procédé selon une des revendications de 1 à 6, **caractérisé en ce que** l'estimation est effectuée à l'aide d'au moins une table de données (32) mémorisée dans le module d'abonné (24).

8. Procédé selon une des revendications de 1 à 7, **caractérisé en ce que** les accès à des réseaux (12, 14, 16) comprennent au moins un accès à des réseaux de téléphonie mobile (12, 14) et au moins un accès à des réseaux locaux (16).

9. Procédé selon une des revendications de 1 à **8, caractérisé en ce que** les accès à des réseaux (12, 14, 16) comprennent au moins deux des accès à des réseaux de téléphonie mobile (12, 14) suivants: un accès à des réseaux de téléphonie mobile (12) de la deuxième génération, un accès à des réseaux de téléphonie mobile d'une génération intermédiaire, et un accès à des réseaux de téléphonie mobile (14) de la troisième génération.

10. Procédé selon la revendications 1, **caractérisé en ce que**, sous la commande du programme (30), au moins un des accès à des réseaux (12, 14, 16) disponibles est affiché sur un affichage (20) de l'appareil de télécommunication mobile (10), et **en ce que** l'accès à des réseaux (12, 14, 16) devant être utilisé est déterminé en réaction à une entrée utilisateur.

11. Procédé selon la revendications 1, **caractérisé en ce que** l'accès à des réseaux (12, 14, 16) devant être utilisé est déterminé automatiquement par le programme (30).

12. Procédé selon une des revendications de 1 à 11, **caractérisé en ce que** le programme (30) communique avec l'appareil de télécommunication mobile (10) par le biais d'une interface logicielle standardisée.

13. Procédé selon la revendications 12, **caractérisé en ce que** l'interface logicielle est une SAT, une boîte à outils d'application SIM, ou une USAT, une boîte à outils d'application USIM.

14. Procédé selon une des revendications de 1 à 13, **caractérisé en ce que** le module d'abonné (24) est un SIM, un module d'identité d'abonné ou un USIM, un module universel d'identité d'abonné.

15. Procédé selon une des revendications de 1 à 14, **caractérisé en ce que** les données (44) qui concernent au moins la disponibilité des accès à des réseaux (12, 14, 16) sont transmises par l'appareil de télécommunication mobile (10) au module d'abonné (24).

16. Appareil de télécommunication mobile (10) doté d'un module d'abonné (24), le module d'abonné (24) comportant un processeur (26) et au moins une mémoire (28), et l'appareil de télécommunication mobile (10) étant configuré pour l'utilisation d'au moins deux accès à des réseaux (12, 14, 16) qui présentent différentes technologies et différents protocoles, la mémoire (28) du module d'abonné (24) contenant un programme (30) qui est configuré pour être exécuté par le processeur (26) du module d'abonné (24) et pour repérer et évaluer des données (44) qui concernent au moins la disponibilité des accès à des réseaux (12, 14, 16) pour un processus de télécommunication, le processus de télécommunication étant une transmission vocale ou de données à établir, et l'accès à des réseaux (12, 14, 16) à utiliser pour ce processus de télécommunication étant déterminé sous la commande du programme (30).

17. Module d'abonné (24) comportant un processeur (26) et au moins une mémoire (28) et étant configuré pour la communication avec un appareil de télécommunication mobile (10), l'appareil de télécommunication mobile (10) étant configuré pour l'utilisation d'au moins deux accès à des réseaux (12, 14, 16) qui présentent différentes technologies et différents protocoles, la mémoire (28) du module d'abonné (24) contenant un programme (30) qui est configuré pour être exécuté par le processeur (26) du module d'abonné (24) et pour repérer et évaluer des données (44) de l'appareil de télécommunication mobile (10) qui concernent au moins la disponibilité des accès à des réseaux (12, 14, 16) pour un processus de télécommunication, le processus de télécommunication étant une transmission vocale ou de données à établir, et l'accès à des réseaux (12, 14, 16) à utiliser pour ce processus de télécommunication étant déterminé sous la commande du programme (30).

18. Dispositif selon la revendication 16 ou la revendication 17, **caractérisé en ce que** le dispositif est configuré pour exécuter un procédé selon une des revendications de 1 à 15.
